Europäisches Patentamt

European Patent Office

Office européen des brevets

(11) Veröffentlichungsnummer : **0 019 191**
B1

(12) # EUROPÄISCHE PATENTSCHRIFT

(45) Veröffentlichungstag der Patentschrift :
22.09.82

(51) Int. Cl.³ : **D 21 H  5/10**, B 32 B  29/00

(21) Anmeldenummer : 80102457.1

(22) Anmeldetag : 06.05.80

(54) Sicherheitspapier.

(30) Priorität : 16.05.79 DE 2919649

(43) Veröffentlichungstag der Anmeldung :
26.11.80 (Patentblatt 80/24)

(45) Bekanntmachung des Hinweises auf die Patenterteilung : 22.09.82 Patentblatt 82/38

(84) Benannte Vertragsstaaten :
CH FR GB IT LI SE

(56) Entgegenhaltungen :
DE A 2 156 888
DE A 2 633 164
DE B 2 152 090

(73) Patentinhaber : BROWN, BOVERI & CIE Aktiengesellschaft Mannheim
Kallstadter Strasse 1
D-6800 Mannheim Käfertal (DE)

(72) Erfinder : Berthold, Rainer, Dipl.-Phys.
Wielandstrasse 4
D-6901 Gaiberg (DE)
Erfinder : Strietzel, Rainer
Schnepfengrund 8
D-6900 Heidelberg 1 (DE)

(74) Vertreter : Kempe, Wolfgang, Dr. et al
c/o Brown, Boveri & Cie AG Postfach 351
D-6800 Mannheim 1 (DE)

Imprimerie Jouve, 18, rue St-Denis, 75001 Paris, France

## Sicherheitspapier

Die Erfindung betrifft ein Sicherheitspapier, dem in einer Fertigungsstufe bei der Herstellung des Papieres aus papierbildenden Fasern ein mit Unterbrechungen versehener, beschichteter, folienartiger Träger eingebettet wurde, dessen Breite kleiner als die Breite des Papiers ist. Unter Papier sollen hier alle papierartigen Materialien verstanden werden. Ein derartiges Sicherheitspapier und Verfahren zu seiner Herstellung sind aus der DE-B-21 52 090 bekannt. Dabei wird einer Papierbahn ein poröses Band, welches ein Netzgebilde aus Kunststoff darstellt, dessen Breite kleiner als die Breite des Papiers ist, derart eingearbeitet, daß die Papierfasern bei der Papierherstellung auf beiden Seiten des Bandes angeordnet sind. Zur Erhöhung der Sicherheit kann das Kunststoffnetz besonders ausgestaltet sein, z.B. gefärbt oder mit einer dünnen Metall- oder Metalloxidschicht beschichtet sein. Mit Hilfe dieser Verfahren können entweder die optischen Eigenschaften des Papiers selbst oder ein äußeres magnetisches oder elektrisches Feld beeinflußt werden.

Aus der DE-A-21 56 888 ist ein weiteres Verfahren zur Herstellung von Sicherheitspapier bekannt. Dabei wird in Papierbahn ein thermoplastisches Material eingelagert und die Temperatur bei der Herstellung soweit erhöht, daß dieses Material schmilzt. Dadurch vermischt sich das schmelzende Material mit den angrenzenden Fasern, so daß sich das Material nicht mehr vom Papier trennen läßt. Das Vorhandensein des thermoplastischen Materials läßt sich optisch oder mechanisch bestimmen. Dabei kann die Erkennbarkeit durch Färben oder Metallisieren verbessert werden.

Aus der DE-A-26 33 164 ist eine Identitätskarte mit Datenspeicher in Form einer integrierten Halbleiterschaltung bekannt. Die Identitätskarte besteht aus wenigstens drei Schichten, von denen die mittlere eine Aussparung aufweist, in die die integrierte Halbleiterschaltung eingesetzt ist. Die Kontakte der Halbleiterschaltung sind an der Stirnkante der Identitätskarte zugänglich.

Aus der DE-C-16 96 245 ist ein Sicherheitspapier bekannt, welches Einlagerungen aus ferromagnetischem Material in Form von Fäden, Plättchen oder Fasern bestimmter charakteristischer Eigenschaften enthält. Das ferromagnetische Material kann nachträglich mit einer Codierung versehen werden. Die Codierung kann auch durch das magnetische Material selbst, durch seine spezielle Anordnung, seine Ausrichtung usw. erzielt werden.

Es ist leicht einzusehen, daß die Sicherungswirkung der bekannten Einlagerungen aus ferromagnetischem Material oder Kunststoff klein ist, da die Zahl der Codierungen beschränkt ist und die Codierungen selbst von außen leicht erkennbar sind, daß andererseits der Einbau einer integrierten Halbleiterschaltung zwar eine hohe Sicherheitswirkung wegen der großen Zahl der Codierungen besitzt, daß aber andererseits die mechanisch-stabile Unterbringung der zerbrechilchen Halbleiterschaltung sowie die elektrische Verbindung zur Halbleiterschaltung sehr große Probleme aufwirft.

Der vorliegenden Erfindung liegt deshalb die Aufgabe zugrunde, ein Sicherheitspapier anzugeben, bei dem Einlagen aus beschichteten, folienartigen Trägern dauerhaft eingebettet werden können, die eine sehr große Anzahl von Codiermöglichkeiten und damit einen hohen Sicherungseffekt bieten.

Diese Aufgabe wird dadurch gelöst, daß auch die Länge des Trägers kleiner als die Länge des Papiers ist, daß der Träger aus Polyimidfolie besteht und daß er mit einer elektronischen Schaltung in Dünnfilm- oder Hybrid-Technik versehen ist. Auf diese Weise wird eine feste Bindung der Papierfasern nicht nur im Bereich der Durchbrechungen der Trägerfolie sondern am ganzen umlaufenden äußeren Rand des fertigen Papierblatts erreicht. Dabei ist die Trägerfolie nicht als netzartiges Gebilde ausgeführt, sondern als ganzflächige Folie mit wenigstens einer Durchbrechung, was Voraussetzung ist für das Aufbringen einer elektronischen Schaltung einerseits und einer guten Papierbildung andererseits. Träger und Papier können zusätzlich verklebt sein.

Die verwendete Polyimidfolie ist von $-269°$ bis $+400°C$ beständig, extrem reißfest, transparent und gut metallisierbar. Sie ist in Stärken bis herab von zur Zeit 7,5 µm erhältlich.

Elektronische Schaltungen in Dünnfilm-Technik bestehen aus einer Anzahl von neben- und übereinander angeordneten, dünnen Schichten von Metallen und Isolierstoffen, wobei die Stärke einer dieser Schichten in der Größenordnung von 100 nm liegt.

Vorzugsweise ist die Folie mit mindestens einer Halbleiterschaltung versehen. Halbleiter-Dünnschicht-Schaltungen, wie sie zur Ausrüstung von erfindungsgemäßen Sicherheitspapier brauchbar sind, sind in der Halbleiterindustrie bereits seit längerer Zeit bekannt.

Es ist jedoch auch möglich, Hybrid-Schaltungen einzusetzen. Bei diesen Schaltungen werden die passiven Bauelemente, wie Widerstände, Kondensatoren und Leiterbahnen aus dünnen Metall- und Isolierschichten aufgebaut, während die aktiven Bauelemente wie Transistoren, Dioden und integrierte Schaltkreise nachträglich als Halbleiterbauelemente eingesetzt werden. Auch diese Technick ist in der Halbleiterindustrie seit langem bekannt.

Um zu verhindern, daß ein Knick im Sicherheitspapier, z.B. beim Falten einer Banknote, durch einen Ausfall der elektronischen Schaltung zum Ausfall des Fälschungssicherungseffekts führt, wird vorzugsweise die elektronische Schaltung mehrfach auf der Folie aufgebracht.

Da Dünnschichtschaltungen empfindlich gegen Feuchtigkeit und in der Luft befindliche aggressive Stoffe sind, wird der Träger wenigstens auf der die Schaltung tragenden Seite mit einem weiteren Träger bzw. einer Schicht abgedeckt. Ist der Träger wie z.B. eine Polyimid-Folie zwar wasserdicht, aber sauerstoffdurchlässig, so sind die weiteren Schichten vorzugsweise ganzflächig metallisiert. Diese Metallisierung kann bei Bedarf ihrerseits mit einer dritten Schicht abgedeckt sein. Diese Metallisierungen können als Leiterbahn, Kondensatorelektrode oder anderes elektronisches Bauteil benutzt werden.

Um ein Eindringen von Feuchtigkeit und Gasen seitlich in den Trägerstapel zu verhindern, sind die Träger und Schichten vorzugsweise am Rande miteinander versiegelt. Die Versiegelung kann durch Druck und Wärme mit und ohne Verwendung von Klebstoffen erfolgen.

Anhand der Zeichnung soll die Erfindung in Form eines Ausführungsbeispiels erläutert werden.

Es zeigen :

Figur 1 einen Blick auf ein Blatt Sicherheitspapier ;

Figur 2 einen Querschnitt durch einen Stapel von teilweise metallisierten Folien.

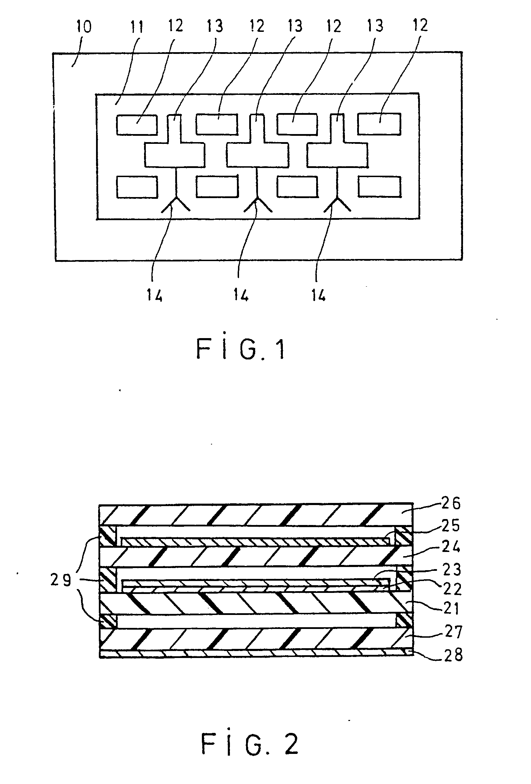

In Fig. 1 erkennt man ein Blatt Papier 10, in dem ein Blatt 11 aus Polyimidfolie eingebettet ist. Die äußeren Abmessungen der Kunststoffolie 11 sind kleiner als die Abmessungen des Papierblatts 10. Auf diese Weise wird eine feste Haftung der Papierfasern im Randbereich ermöglicht. Die Fläche der Kunststoffolie 11 ist mit mehreren Durchbrechungen 12 versehen. Dadurch wird auch im Bereich dieser Durchbrechungen 12 eine feste Haftung der Papierfasern auf der Ober- und Unterseite der Kunststoffolie 11 erreicht. Durch die Einlage einer reißfesten Kunststoffolie 11 wird die Festigkeit des gesamten Papiers 10 verbessert. In dem von Durchbrechungen 12 freien Teil der Kunststoffolie 11 sind drei gleiche elektronische Schaltungen 13 angeordnet. Anordnung und Größe der elektronischen Schaltung ist in der Zeichnung nur als Beispiel gewählt ; in der Realität sind diese elektronischen Schaltungen wesentlich kleiner zu realisieren. Mit Hilfe von Antennen 14 kann eine drahtlose Verbindung von äußeren Peripheriegeräten zu den elektronischen Schaltungen 13 und umgekehrt hergestellt werden.

In Fig. 2 erkennt man eine erste Folie 21, die zwei Metallisierungsschichten 22, 23 trägt. Diese beiden Schichten 22, 23 symbolisieren den aktiven Teil der elektronischen Schaltung. Um die elektronische Schaltung gegen Feuchtigkeit und aggressive Gase zu schützen, ist die Schaltungsträgerfolie 21 auf ihrer Ober- und Unterseite mit je einer Folie bzw. Schicht 24, 27, die ihrerseits mit ganzflächigen Metallisierungen 25, 28 versehen sind, abgedeckt. Die untere Folie 27 ist jedoch nur dann erforderlich, wenn das Folienmaterial feuchtigkeits- und/oder gasdurchlässig ist. Die außen liegende Metallisierung, z.B. die Metallisierung 25 auf der oberen Folie 24 kann durch eine dritte Folie bzw. Schicht 26 gegen mechanische Beschädigungen abgedeckt werden. Als mechanischer Schutz kann jedoch auch das Papier selbst dienen. Eine Randversiegelung 29 aus geeignetem Klebermaterial verhindert das Eindringen von Feuchtigkeit und Gasen seitlich in den Folienstapel.

## Ansprüche

1. Sicherheitspapier, dem in einer Fertigungsstufe bei der Herstellung des Papiers (10) aus papierbildenden Fasern ein mit Durchbrechungen (12) versehener, beschichteter, folienartiger Träger (11) eingebettet wurde, dessen Breite kleiner als die Breite des Papiers (10) ist, dadurch gekennzeichnet, daß auch die Länge des Trägers (11) kleiner als die Länge des Papiers (10) ist, daß der Träger (11) aus Polyimidfolie besteht und daß er mit einer elektronischen Schaltung (13) aus Dünnfilm- oder Hybrid-Technik versehen ist.

2. Sicherheitspapier nach Anspruch 1, dadurch gekennzeichnet, daß der Träger (11) mit einer Halbleiterschaltung versehen ist.

3. Sicherheitspapier nach Anspruch 1 oder 2, dadurch gekennzeichnet, daß die Schaltung (13) mehrfach auf dem Träger (11) aufgebracht ist.

4. Sicherheitspapier nach wenigstens einem der Ansprüche 1 bis 3, dadurch gekennzeichnet, daß der Träger (11, 21) wenigstens auf der die Schaltung (13 ; 22, 23) tragenden Seite mit einem weiteren Träger oder einer weiteren Schicht (24, 27) abgedeckt ist.

5. Sicherheitspapier nach Anspruch 4, dadurch gekennzeichnet, daß die weiteren Träger bzw. Schichten (24, 27) ganzflächig metallisiert sind.

6. Sicherheitspapier nach Anspruch 5, dadurch gekennzeichnet, daß die Metallisierung (25) der weiteren Träger bzw. Schichten (24) durch eine dritte Schicht (z.B. Folie) (26) abgedeckt ist.

7. Sicherheitspapier nach wenigstens einem der Ansprüche 1 bis 6, dadurch gekennzeichnet, daß die Träger und Schichten (21, 24, 26, 27) am Rande miteinander versiegelt sind.

8. Sicherheitspapier nach wenigstens einem der Ansprüche 1 bis 7, dadurch gekennzeichnet, daß das papier (10) mit den Trägern und Schichten (11, 24, 26, 27) verklebt ist.

## Claims

1. Security paper in which a coated, foil-like carrier (11) provided with perforations (12) and whose width is less than the width of the paper was embedded during a production stage in the manufacture of the paper (10) from paper-forming fibres, characterised in that the length of the carrier (11) is also less than the length of the paper (10), that the carrier (11) consists of polyimide foil, and that it is provided with an electronic circuit (13) from thin film circuit technique or hybrid circuit technique.

2. Security paper according to Claim 1, characterised in that the carrier (11) is provided with a semiconductor circuit.

3. Security paper according to Claim 1 or 2, characterised in that the circuit (13) is multiply applied to the carrier (11).

4. Security paper according to at least one of Claims 1 to 3, characterised in that the carrier (11, 21) is covered, at least on the side bearing the circuit (13, 22, 23), with a further carrier or a further layer (24, 27).

5. Security paper according to Claim 4, characterised in that the further carrier or layers (24, 27) are metallised over their whole surface.

6. Security paper according to Claim 5, characterised in that the metallising (25) of the further carriers of layers (24) is covered by a third layer (e.g. foil) (26).

7. Security paper according to at least one of Claims 1 to 6, characterised in that the carriers and layers (21, 24, 26, 27) are sealed to one another along their edge.

8. Security paper according to at least one of Claims 1 to 7, characterised in that the paper (10) is stuck to the carriers and layers (11, 24, 26, 27).

## Revendications

1. Papier de sécurité dans lequel est encastré, dans une étape de fabrication lors de la préparation du papier (10), en fibres de formation de papier, un support (11) du type feuille, revêtu et pourvu de découpures (12), dont la largeur est plus faible que la largeur du papier (10), papier caractérisé en ce que la longueur du support (11) est également plus faible que la longueur du papier (10), en ce que le support (11) est constitué par une feuille de polyimide et en ce qu'il comporte un circuit électronique (13) de la technique des couches minces ou d'une technique hybride.

2. Papier de sécurité selon la revendication 1, caractérisé en ce que le support (11) est pourvu d'un circuit de semi-conducteur.

3. Papier de sécurité selon la revendication 1 ou 2, caractérisé en ce que le circuit (13) est appliqué plusieurs fois sur le support (11).

4. Papier de sécurité selon au moins l'une des revendications 1 à 3, caractérisé en ce que le support (11, 21) au moins sur le côté portant le circuit (13 ; 22, 23) est recouvert d'un autre support ou d'une autre couche (24, 27).

5. Papier de sécurité selon la revendication 4, caractérisé en ce que l'autre support ou les autres couches (24, 27) sont métallisés sur toute la surface.

6. Papier de sécurité selon la revendication 5, caractérisé en ce que la métallisation (25) de l'autre support ou des autres couches (24) est recouverte d'une troisième couche (par exemple une feuille) (26).

7. Papier de sécurité selon au moins l'une des revendications 1 à 6, caractérisé en ce que le support et les couches (21, 24, 26, 27) sont scellés ensemble sur le bord.

8. Papier de sécurité selon au moins l'une des revendications 1 à 7, caractérisé en ce que le papier (10) est collé avec le supports et les couches (11, 24, 26, 27).

FİG.1

FİG. 2